# EUROPEAN PATENT SPECIFICATION

(11) **EP 2 265 482 B1**
(45) Date of publication and mention of the grant of the patent: **10.02.2016**
(21) Application number: 08864040.4
(22) Date of filing: 17.11.2008
(51) Int. Cl.: B62D 15/02

(54) **VEHICLE PARKING ASSIST SYSTEM AND METHOD**
PARKHILFESYSTEM UND VERFAHREN FÜR EIN FAHRZEUG
SYSTÈME ET PROCÉDÉ D'AIDE AU STATIONNEMENT DE VÉHICULE

(30) Priority: 26.12.2007 JP 2007334018
(43) Date of publication of application: 29.12.2010
(73) Proprietor: Nissan Motor Co., Ltd., Yokohama-shi, Kanagawa 221-0023 (JP)
(72) Inventor: TAKANO, Teruhisu, Kanagawa 243-0123 (JP)
(74) Representative: Hoefer & Partner Patentanwälte mbB
(86) International application number: PCT/JP2008/003341
(87) International publication number: WO 2009/081519

(56) References cited:
- EP-A- 1 862 376
- WO-A-2005/120932
- WO-A-2006/100892
- WO-A-2007/015446
- WO-A1-2009/044513

## Description

### Technical Field

The present invention relates to a vehicle parking assist system which assists a driving operation at parking a vehicle and a method thereof.

### Background Art

As a conventional vehicle parking assist system which assists a driving operation at parking a vehicle, for example, a system disclosed in Japanese Patent Laid-open Publication No. 2005-239048 is known. This system transforms images around the vehicle captured by onboard cameras into an overhead image; and draws and displays on a display device a figure of the vehicle at a position of the vehicle on the overhead image and a parking frame figure at a target parking position set by a driver of the vehicle. The system thus enables the driver of the vehicle to easily recognize a path from the current position of the vehicle to the target parking position. Herein, the vehicle is a vehicle on which the parking assist system is mounted.

However, the above-described conventional parking assist system only causes the driver of the vehicle to recognize the path from the current position of the vehicle to the target parking position but is not configured to cause the driver to recognize from which position the driver should start parking to reach the target parking position without performing steering operation during the parking action. Accordingly, the aforementioned conventional system does not provide adequate assistance for inexperienced drivers in driving operations.

WO 2005/120932 A relates to a method and a device for assisting the parking of a motor vehicle in a parking space. Said method comprises the following steps: the vehicle is driven up to the parking space; the parking space is measured by means of sensors arranged on the motor vehicle; a nominal parking path is calculated and displayed on a display; and the actual parking path is displayed on the display in such a way that the actual parking path can be adapted to the nominal parking path.

WO 2006/100892 A describes a parking assistance apparatus wherein a position and a yaw angle of a vehicle are acquired continuously from an initial stop position A, and a vehicle mark C2' in moving the vehicle backwards with a steering angle maintained during a backward movement operation from a backward movement start position B in parking the vehicle in a target parking space S is displayed on a display. The vehicle mark is displayed in a shifting manner on the display such that the target parking space S is traced based on a momentary steering angle and a momentary yaw angle of the vehicle, which result from backward movement of the vehicle. When the vehicle mark deviates from the target parking space S during the backward movement operation, a driver adjusts the steering angle. The vehicle mark C2' is shifted on the display based on a change in the steering angle to be turned into a vehicle mark C4 at a suitable position corresponding to the target parking space S.

WO 2007/015446 A describes a vehicle surrounding monitoring device including at least one camera installed in an own vehicle to image a video around the own vehicle, an obstacle sensor for detecting an obstacle within an imaging range of the camera, a pixel synthesis unit for receiving a camera image imaged by the camera and converting the camera image into a view point converted image seen from a virtual view point above the own vehicle, and a display device for displaying the view point conversion image converted by the pixel synthesis unit. Simultaneously when a warning is given by a warning sound upon entry of an obstacle within an obstacle detection range of the obstacle sensor, an image of the obstacle detection range is synthesized with an obstacle image imaged by the camera and included in the view point converted image to be in contact therewith.

WO 2009/044513 A1 discloses a parking assistant with: shooting part shooting surroundings; parking target position setter setting parking target position in surroundings image by shooting part; rearward movement starting position calculator calculating rearward movement starting position based on: target position by position setter, and vehicle's movable area, rearward movement starting position denoting position stopping vehicle and starting rearward movement of vehicle, to park vehicle in target position; movement calculator sensing movement direction and movement amount of vehicle; and image generator superposing an information image on surroundings image based on movement direction and amount which are sensed with movement calculator. Information image denotes rearward movement starting position for allowing vehicle to be parked in target position. According to vehicle's movement, image generator generates, with different displays, following sub-positions of rearward movement starting position: first sub-position allowing vehicle to move to target position, and second sub-position failing to allow vehicle to be parked in target position.

The object underlying the present invention is to provide a parking assist system which is simple and reliable in operation and avoids the drawbacks of the state of the art.

According to the invention, the object is solved by the features of the main claim. The sub-claims contain further preferred developments of the invention.

### Disclosure of Invention

The present invention draws a recommended parking start position which a vehicle can reach with a current value of steering angle of the vehicle unchanged and from which the vehicle can reach the target parking position with the steering angle being constant on an overhead image around the vehicle as a parking start frame figure and displays the overhead image with the parking start frame figure drawn thereon in such a manner that the position of the parking start frame figure on the overhead image varies with changes of the steering angle of the vehicle, a direction indicator icon drawing unit which, when the vehicle reaches the recommended parking start position, draws on the overhead image, an icon indicating a direction of steering operation to achieve a steering angle at the parking action from the recommended parking start position to the target parking position.

### Brief Description of the Drawings

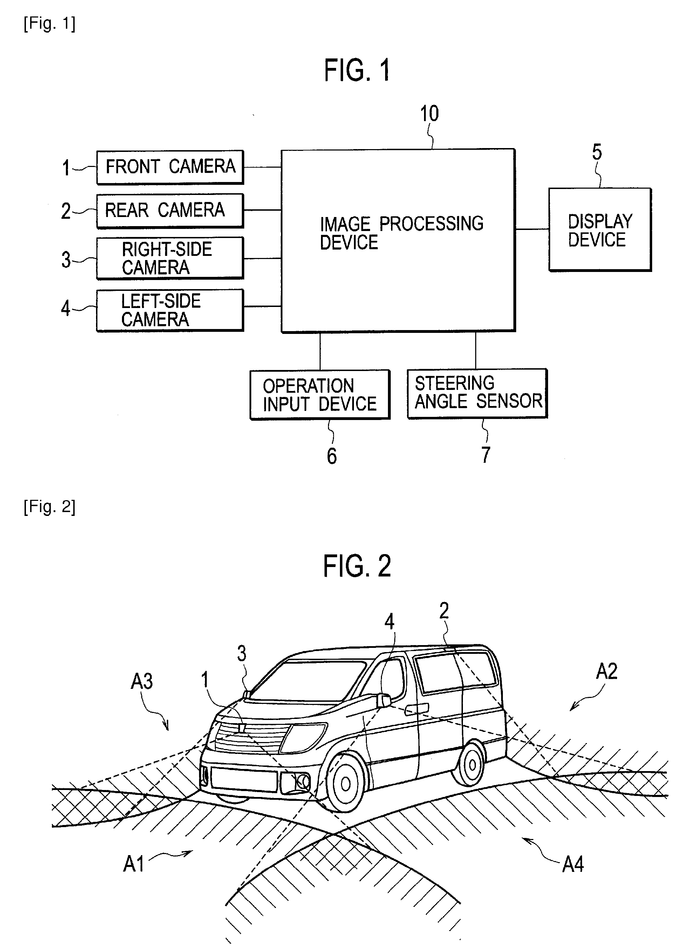

[fig. 1] Fig. 1 is a block diagram showing a schematic configuration of a parking assist system to which the present invention is applied.
[fig.2] Fig. 2 is a view explaining positions of four onboard cameras and areas taken by the onboard cameras.

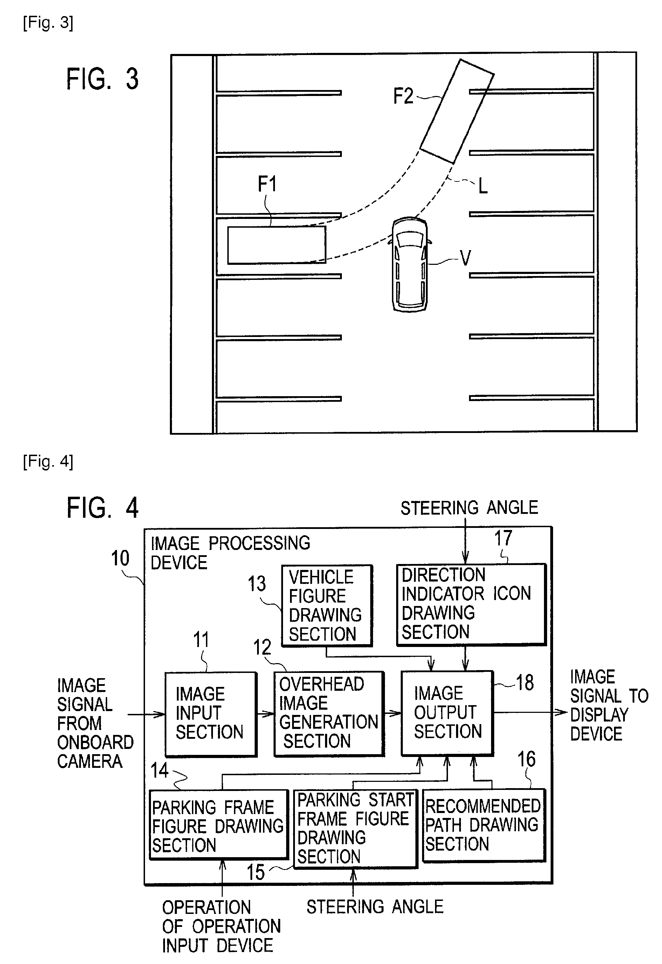

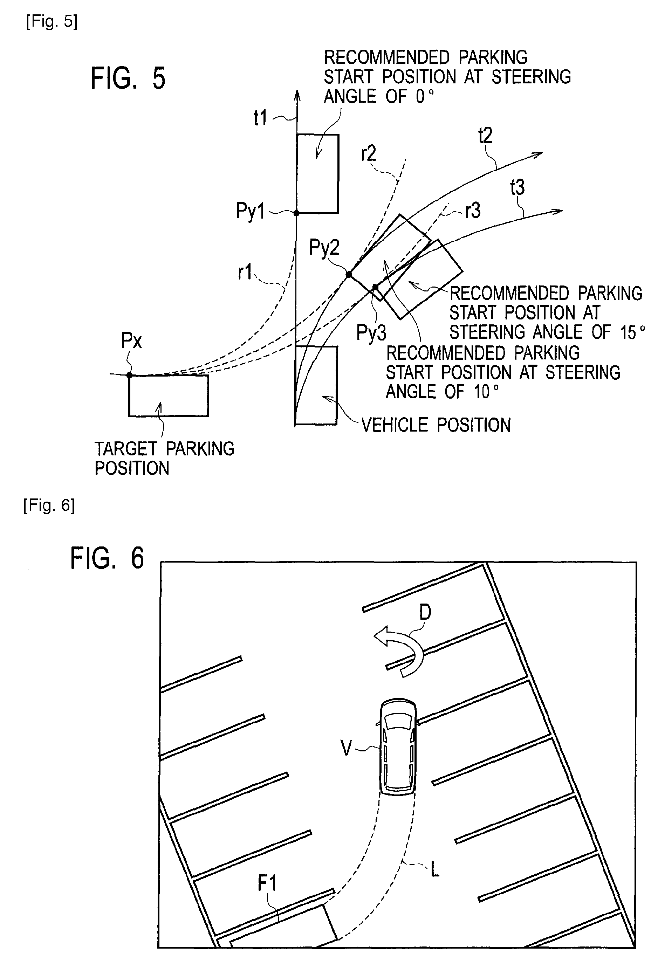

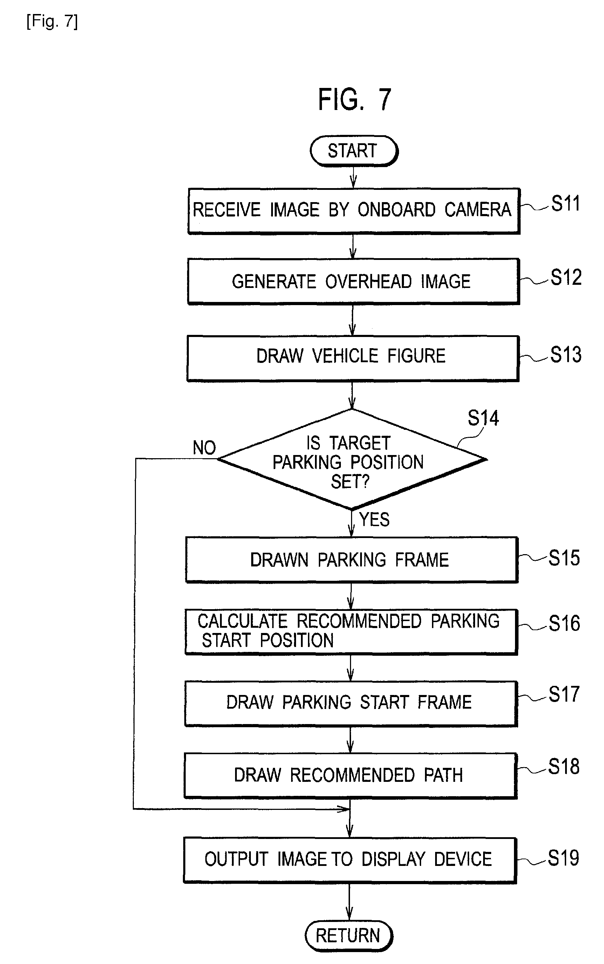

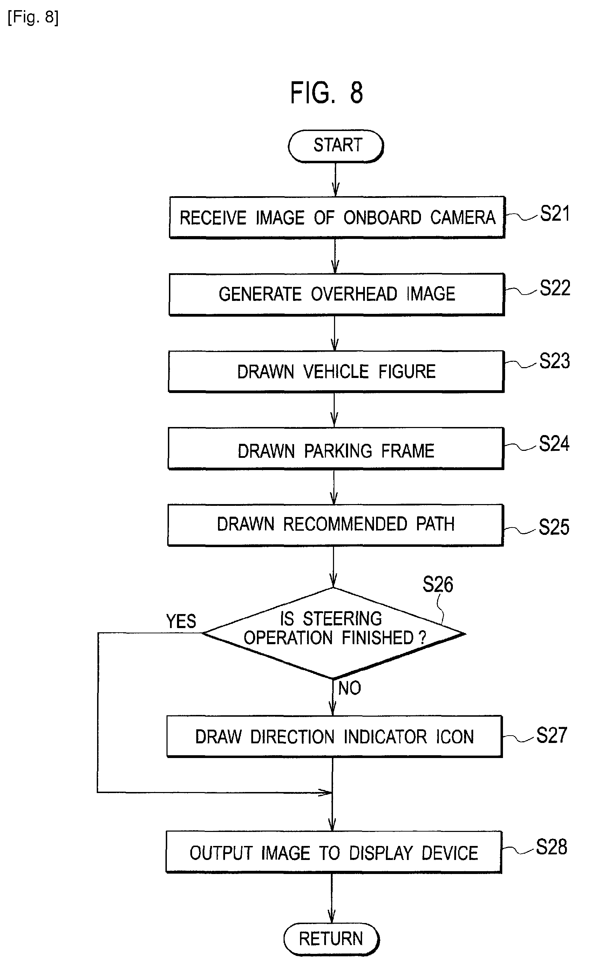

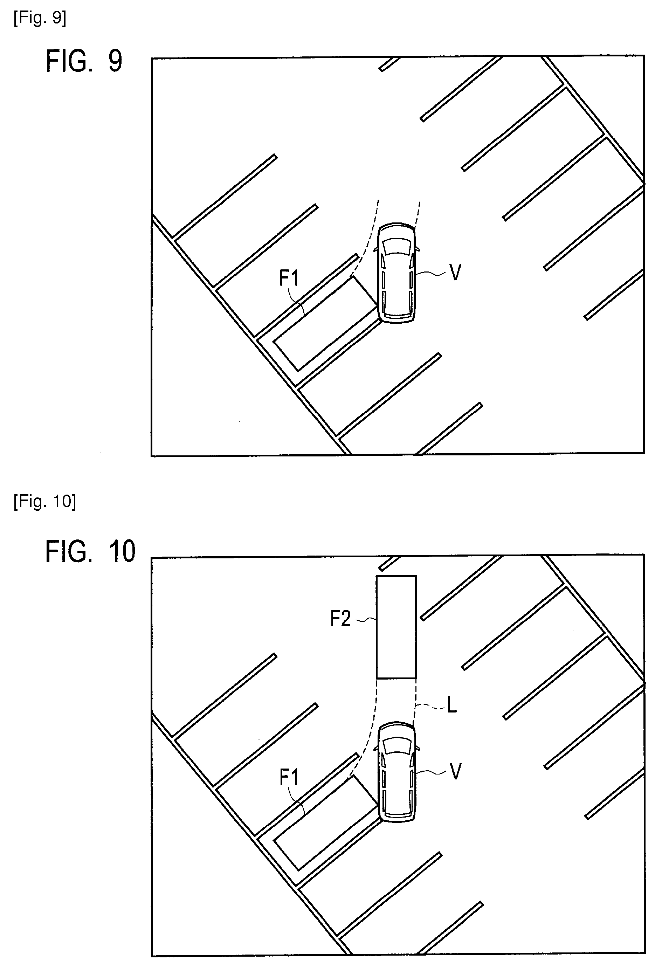

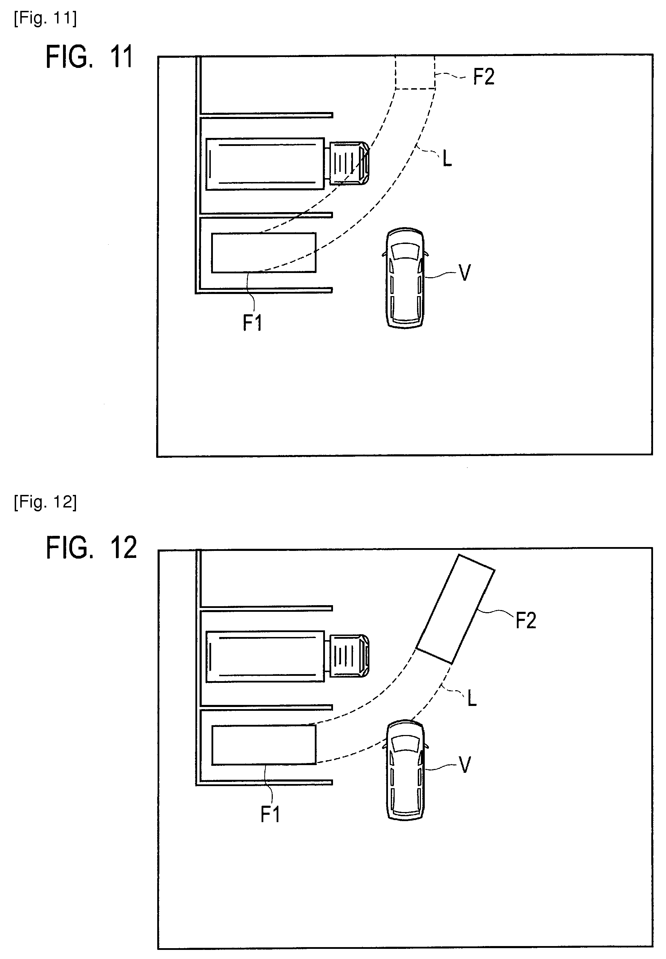

[fig.3] Fig. 3 is a view showing an example of an image displayed on a display device.

## Claims

1. A parking assist system, comprising:
imaging units (1, 2, 3, 4) capturing images around a vehicle on which the parking assist system is mounted;
an overhead image generating unit (12) generating an overhead image viewed down from above the vehicle by joining the images captured by the imaging units (1, 2, 3, 4); and
a display unit (5) displaying the generated overhead image, a parking frame figure (F1) corresponding to a target parking position as a parking target of the vehicle, and a parking start frame figure (F2) corresponding to a recommended parking start position which the vehicle can reach with a steering angle of the vehicle being constant for starting parking of the vehicle to the target parking position,
wherein the position of the parking start frame figure (F2) on the overhead image changes corresponding to changes in the steering angle.

2. The parking assist system according to claim 1, further comprising:
a recommended parking start position calculation unit (15) calculating as the recommended parking start position a position which the vehicle can reach with a current value of steering angle of the vehicle unchanged and from which the vehicle can reach the target parking position with the steering angle being constant; and
a figure drawing unit (13, 14, 15) drawing the parking start frame figure (F2) at the recommended parking start position on the generated overhead image.

3. The parking assist system according to claim 2, wherein
the recommended parking start position calculation unit (15) calculates a predicted trajectory (t, t1, t2, t3) of the vehicle moving with the current value of the steering angle unchanged; calculates an arc or line (r, r1, r2, r3) which is tangent to the predicted trajectory (t, t1, t2, t3) and passes through a referential point (Px) of the target parking position; and then obtains a position whose referential point is a tangent point (Py, Py1, Py2, Py3) between the arc or line (r, r1, r2, r3) and the predicted trajectory (t, t1, t2, t3) as the recommended parking start position.

4. The parking assist system according to claim 2 or 3, wherein
the recommended parking start position calculation unit (15) terminates the calculation of the recommended parking start position and the figure drawing unit (15) terminates the drawing of the parking start frame figure (F2) when the vehicle reaches the recommended parking start position.

5. The parking assist system according to claim 4, wherein
the recommended parking start position calculation unit (15) starts again the calculation of the recommended parking start position and the figure drawing unit (15) starts again the drawing of the parking start frame figure (F2) when the vehicle stops the parking action from the recommended parking start position.

6. The parking assist system according to any one of claims 2 to 5, wherein
the figure drawing unit (15) judges whether there is an obstacle on the path from the calculated recommended parking start position to the target parking position and draws the parking start frame figure (F2) in different forms depending on the presence or absence of the obstacle.

7. The parking assist system according to any one of claims 1 to 6, further comprising:
a recommended path drawing unit (16) drawing on the overhead image a recommended path (L) for the parking action from the recommended parking start position to the target parking position.

8. The parking assist system according to any one of claims 1 to 7, further comprising:
a direction indicator icon (17) drawing unit which, when the vehicle reaches the recommended parking start position, draws on the overhead image, an icon (D) indicating a direction of steering operation to achieve a steering angle at the parking action from the recommended parking start position to the target parking position.

9. The parking assist system according to any one of claims 1 to 8, whereinthe display unit (5) displaying the generated overhead image, the parking frame figure (F1) corresponding to the target parking position as a parking target of the vehicle, a vehicle figure (V) indicating a current position of the vehicle, and the parking start frame figure (F2) corresponding to the recommended parking start position which the vehicle can reach with a constant steering angle; for starting parking of the vehicle to the target parking position.

10. A parking assist method, comprising the steps of:
capturing images around a vehicle and generating an overhead image viewed down from above the vehicle by joining the captured images;
displaying the generated overhead image, a parking frame figure (F1) corresponding to a target parking position as a parking target of the vehicle, and a parking start frame figure (F2) corresponding to a recommended parking start position which the vehicle can reach with a curent value of a steering angle of the vehicle unchanged for starting parking of the vehicle to the target parking position; and
changing the position of the parking start frame figure (F2) on the overhead image corresponding to changes in the steering angle

## Patentansprüche

1. Parkassistenzsystem, umfassend:
Bilderfassungseinheiten (1, 2, 3, 4), die Bilder rund um ein Fahrzeug, an dem das Parkassistenzsystem montiert ist, aufnehmen;
eine Overhead-Bilderzeugungseinheit (12), die ein Overhead-Bild von oberhalb des Fahrzeugs nach unten durch Verbinden der durch die Bilderfassungseinheiten (1, 2, 3, 4) aufgenommenen Bilder erzeugt; und
eine Anzeigeeinheit (5), die das erzeugte Overhead-Bild, eine Parkrahmenfigur (F1), die einer Ziel-Parkposition als Parkziel des Fahrzeugs entspricht, und eine Parkstartrahmenfigur (F2) anzeigt, die einer empfohlenen Parkstartposition entspricht, die das Fahrzeug mit konstantem Lenkwinkel des Fahrzeugs zum Starten des Parkens des Fahrzeugs an der Ziel-Parkposition erreichen kann,
wobei sich die Position der Parkstartrahmenfigur (F2) auf dem Overhead-Bild entsprechend Änderungen des Lenkwinkels verändert.

2. Parkassistenzsystem nach Anspruch 1, ferner umfassend:
eine Berechnungseinheit (15) einer empfohlenen Parkstartposition, die als empfohlene Parkstartposition eine Position berechnet, die das Fahrzeug mit einem momentanen Wert des Lenkwinkels des Fahrzeugs unverändert erreichen kann und von dem das Fahrzeug die Ziel-Parkposition mit dem konstanten Lenkwinkel erreichen kann; und
eine Figur-Zeichnungseinheit (13, 14, 15) welche die Parkstartrahmenfigur (F2) an der empfohlenen Parkstartposition auf dem erzeugten Overhead-Bild zeichnet.

3. Parkassistenzsystem nach Anspruch 2, wobei
die Berechnungseinheit (15) einer empfohlenen Parkstartposition eine prognostizierte Bewegungsbahn (t, t1, t2, t3) des Fahrzeugs berechnet, das sich mit dem momentanen Wert des Lenkwinkels unverändert bewegt; einen Bogen oder eine Linie (r, r1, r2, r3) berechnet, der/die tangential zur prognostizierten Bewegungsbahn (t, t1, t2, t3) verläuft und durch einen Referenzpunkt (Px) der Ziel-Parkposition hindurchgeht; und danach eine Position erreicht, deren Referenzpunkt ein Tangentenpunkt (Py, Py1, Py2, Py3) zwischen dem Bogen oder der Linie (r, r1, r2, r3) und der prognostizierten Bewegungsbahn (t, t1, t2, t3) als empfohlene Parkstartposition ist.

4. Parkassistenzsystem nach Anspruch 2 oder 3, wobei
die Berechnungseinheit (15) einer empfohlenen Parkstartposition die Berechnung der empfohlenen Parkstartposition beendet und die Figur-Zeichnungseinheit (15) das Zeichnen der Parkstartrahmenfigur (F2) beendet, wenn das Fahrzeug die empfohlene Parkstartposition erreicht.

5. Parkassistenzsystem nach Anspruch 4, wobei
die Berechnungseinheit (15) einer empfohlenen Parkstartposition die Berechnung der empfohlenen Parkstartposition erneut startet und die Figur-Zeichnungseinheit (15) das Zeichnen der Parkstartrahmenfigur (F2) erneut startet, wenn das Fahrzeug den Parkvorgang von der empfohlenen Parkstartposition beendet.

6. Parkassistenzsystem nach einem der Ansprüche 2 bis 5, wobei
die Figur-Zeichnungseinheit (15) beurteilt, ob ein Hindernis auf dem Weg von der berechneten empfohlenen Parkstartposition zur Ziel-Parkposition vorhanden ist und die Parkstartrahmenfigur (F2) in Abhängigkeit vom Vorhandensein oder Fehlen des Hindernisses in unterschiedlichen Formen zeichnet.

7. Parkassistenzsystem nach einem der Ansprüche 1 bis 6, ferner umfassend:
eine Zeichnungseinheit (16) eines empfohlenen Wegs, die auf dem Overhead-Bild einen empfohlenen Weg (L) für den Parkvorgang von der empfohlenen Parkstartposition zur Ziel-Parkposition zeichnet.

8. Parkassistenzsystem nach einem der Ansprüche 1 bis 7, ferner umfassend:
eine Zeichnungseinheit (17) eines Fahrtrichtungsanzeigesymbols, die, wenn das Fahrzeug die empfohlene Parkstartposition erreicht, auf dem Overhead-Bild ein Symbol (D) zeichnet, das eine Richtung eines Lenkvorgangs zum Erreichen eines Lenkwinkels beim Parkvorgang von der empfohlenen Parkstartposition zur Ziel-Parkposition anzeigt.

9. Parkassistenzsystem nach einem der Ansprüche 1 bis 8, wobei
die Anzeigeeinheit (5), die das erzeugte Overhead-Bild, die Parkrahmenfigur (F1), die der Ziel-Parkposition als Parkziel des Fahrzeugs entspricht, eine Fahrzeugfigur (V), die eine momentane Position des Fahrzeugs kennzeichnet, und die Parkstartrahmenfigur (F2) anzeigt, die der empfohlenen Parkstartposition entspricht, die das Fahrzeug mit konstantem Lenkwinkel zum Starten des Parkens des Fahrzeugs an der Ziel-Parkposition erreichen kann.

10. Parkassistenzverfahren, das folgende Schritte umfasst:
Aufnehmen von Bildern rund um ein Fahrzeug und Erzeugen eines Overhead-Bilds von oberhalb des Fahrzeugs nach unten durch Verbinden der aufgenommenen Bilder;
Anzeigen des erzeugten Overhead-Bilds, einer Parkrahmenfigur (F1), die einer Ziel-Parkposition als Parkziel des Fahrzeugs entspricht, und einer Parkstartrahmenfigur (F2) die einer empfohlenen Parkstartposition entspricht, die das Fahrzeug mit einem momentanen Wert eines Lenkwinkels des Fahrzeugs unverändert erreichen kann, um das Parken des Fahrzeugs an der Ziel-Parkposition zu starten; und
Verändern der Position der Parkstartrahmenfigur (F2) auf dem Overhead-Bild entsprechend Änderungen des Lenkwinkels.

## Revendications

1. Système d'aide au stationnement, comprenant :
des unités de formation d'images (1, 2, 3, 4) capturant des images autour d'un véhicule sur lequel le système d'aide au stationnement est monté ;
une unité de génération d'image aérienne (12) générant une image aérienne vue d'en haut du véhicule en assemblant les images capturées par les unités de formation d'images (1, 2, 3, 4) ; et
une unité d'affichage (5) affichant l'image aérienne générée, une figure de cadre de stationnement (F1) correspondant à une position de stationnement cible en tant que cible de stationnement du véhicule, et une figure de cadre de début de stationnement (F2) correspondant à une position de début de stationnement recommandée que le véhicule peut atteindre avec un angle de braquage du véhicule constant pour commencer le stationnement du véhicule à la position de stationnement cible,
dans lequel la position de la figure de cadre de début de stationnement (F2) sur l'image aérienne change en fonction des changements de l'angle de braquage.

2. Système d'aide au stationnement selon la revendication 1, comprenant en outre :
une unité de calcul de position de début de stationnement recommandée (15) calculant comme étant la position de début de stationnement recommandée une position que le véhicule peut atteindre avec une valeur actuelle inchangée de l'angle de braquage du véhicule et à partir de laquelle le véhicule peut atteindre la position de stationnement cible avec un angle de braquage constant ; et
une unité de dessin de figure (13, 14, 15) dessinant la figure de cadre de début de stationnement (F2) à la position de début de stationnement recommandée sur l'image aérienne générée.

3. Système d'aide au stationnement selon la revendication 2, dans lequel
l'unité de calcul de position de début de stationnement recommandée (15) calcule une trajectoire prédite (t, t1, t2, t3) du véhicule se déplaçant avec la valeur actuelle inchangée de l'angle de braquage ; calcule un arc ou une ligne (r, r1, r2, r3) qui est tangent(e) à la trajectoire prédite (t, t1, t2, t3) et passe par un point de référence (Px) de la position de stationnement cible ; et obtient ainsi une position dont le point de référence est un point de tangence (Py, Py1, Py2, Py3) entre l'arc ou la ligne (r, r1, r2, r3) et la trajectoire prédite (t, t1, t2, t3) comme étant la position de début de stationnement recommandée.

4. Système d'aide au stationnement selon la revendication 2 ou 3, dans lequel
l'unité de calcul de position de début de stationnement recommandée (15) met fin au calcul de la position de début de stationnement recommandée et l'unité de dessin de figure (15) met fin au dessin de la figure de cadre de début de stationnement (F2) lorsque le véhicule atteint la position de début de stationnement recommandée.

5. Système d'aide au stationnement selon la revendication 4, dans lequel
l'unité de calcul de position de début de stationnement recommandée (15) recommence le calcul de la position de début de stationnement recommandée et l'unité de dessin de figure (15) recommence le dessin de la figure de cadre de début de stationnement (F2) lorsque le véhicule arrête l'action de stationnement depuis la position de début de stationnement recommandée.

6. Système d'aide au stationnement selon l'une quelconque des revendications 2 à 5, dans lequel
l'unité de dessin de figure (15) détermine s'il existe un obstacle sur le chemin depuis la position de début de stationnement recommandée calculée vers la position de stationnement cible et dessine la figure de cadre de début de stationnement (F2) sous différentes formes en fonction de la présence ou l'absence de l'obstacle.

7. Système d'aide au stationnement selon l'une quelconque des revendications 1 à 6, comprenant en outre :
une unité de dessin de chemin recommandé (16) dessinant sur l'image aérienne un chemin recommandé (L) pour l'action de stationnement depuis la position de début de stationnement recommandée vers la position de stationnement cible.

8. Système d'aide au stationnement selon l'une quelconque des revendications 1 à 7, comprenant en outre :
une unité de dessin d'icône d'indication de direction (17) qui, lorsque le véhicule atteint la position de début de stationnement recommandée, dessine sur l'image aérienne, une icône (D) indiquant une direction de l'opération de braquage pour atteindre un angle de braquage lors de l'action de stationnement depuis la position de début de stationnement recommandée vers la position de stationnement cible.

9. Système d'aide au stationnement selon l'une quelconque des revendications 1 à 8, dans lequel l'unité d'affichage (5) affichant l'image aérienne générée, la figure de cadre de stationnement (F1) correspondant à la position de stationnement cible en tant que cible de stationnement du véhicule, une figure de véhicule (V) indiquant une position actuelle du véhicule, et la figure de cadre de début de stationnement (F2) correspondant à la position de début de stationnement recommandée que le véhicule peut atteindre avec un angle de braquage constant ;
pour commencer le stationnement du véhicule à la position de stationnement cible.

10. Procédé d'aide au stationnement, comprenant les étapes qui consistent :
à capturer des images autour d'un véhicule et à générer une image aérienne vue d'en haut du véhicule en assemblant les images capturées ;
à afficher l'image aérienne générée, une figure de cadre de stationnement (F1) correspondant à une position de stationnement cible en tant que cible de stationnement du véhicule, et une figure de cadre de début de stationnement (F2) correspondant à une position de début de stationnement recommandée que le véhicule peut atteindre avec une valeur actuelle inchangée d'un angle de braquage du véhicule pour commencer le stationnement du véhicule à la position de stationnement cible ; et
à changer la position de la figure de cadre de début de stationnement (F2) sur l'image aérienne en fonction des changements de l'angle de braquage.
